# EUROPEAN PATENT APPLICATION

(11) **EP 2 214 032 A1**
(43) Date of publication of application: **04.08.2010**
(21) Application number: 09151745.8
(22) Date of filing: 30.01.2009
(51) Int. Cl.: G01S 13/56, G01S 13/87

(54) **A method and system for presence detection**

(71) Applicant: Ford Global Technologies, LLC, Dearborn, MI 48126 (US)
(72) Inventor: Antonsson, Anders, 421 41 Västra Frölunda (SE); Svedoff, Göran, 421 66 Västra Frölunda (SE)
(74) Representative: Andersson, Per Rune

(57) **Abstract**

The present invention relates to method for presence control in a vehicle (1), using at least a first and second arrangement (3, 4) for transmitting and receiving microwave radiation, the method comprising the following steps for each one of said arrangements (3, 4): actuating a microwave transmitter (13) detecting microwave radiation with a microwave receiver (15); and determining a possible presence in the vehicle (1). The method furthermore comprises: each one of said arrangements transmitting using a certain actuation frequency, different from the other; each microwave receiver (15) detecting both the reflected signals from its own microwave transmitter (13) and the transmitted energy from the other microwave transmitters (13) in said arrangements (3, 4), such that mixing products occur as well as difference frequencies of the mixing products, constituting interference; and adapting the actuation frequencies such that, for each one of said arrangements, said interference appear outside the pass band of a Doppler band pass filter.

## Description

### TECHNICAL FIELD

The present invention relates to a method for presence control in a vehicle, using at least a first arrangement for transmitting and receiving microwave radiation and a second arrangement for transmitting and receiving microwave radiation, said method comprising the following steps for each one of said arrangements: actuating a microwave transmitter with a certain actuation frequency; detecting microwave radiation by means of a microwave receiver; and determining whether a living human or animal is present in said vehicle based on the properties of the microwave radiation being received by said microwave receiver.

The present invention also relates to a corresponding system which comprises at least a first arrangement for transmitting and receiving microwave radiation and a second arrangement for transmitting and receiving microwave radiation, each one of said arrangements comprising: a pulse generator for periodically actuating a microwave transmitter with a certain actuation frequency; and a microwave receiver for detecting microwave radiation within said vehicle, the arrangement being arranged for determining whether a living human or animal is present in said vehicle based on the microwave radiation being received by the microwave receiver.

### BACKGROUND

Systems for detection of the presence of humans and animals in a defined area or space are well-known and are commonly used, for example as intrusion detection systems. With regard to vehicles, for example, it is common today to use intrusion detectors in order to provide an alarm in the event that presence of a human or an animal is detected within the passenger compartment of the vehicle. In this manner, it can be expected that the risk for theft of the vehicle can be decreased.

A system for presence detection in a vehicle may comprise a combined radio transmitter and receiver based on microwave technology, which means that the radio transmitter is arranged for emitting microwave radiation into a specified space corresponding to the vehicle's passenger compartment. Furthermore, the receiver is arranged for detecting any microwave radiation which is reflected as a result of humans or animals being present in said space. In order to achieve this, it is previously known to use microwave-based detection units of the so-called Doppler motion sensor type. Such units are based on the Doppler shift phenomenon in order to detect motion of humans and animals in a space.

In the field of intrusion detection, especially in vehicle intrusion detectors, there exists a problem in that the passenger compartment most often is an oblong shape. To get sufficient detection all over the compartment it may fit with more than one intrusion detector, for example one in front and one in rear of compartment. If further detection capability is required, then additional intrusion detectors may be placed in compartment. This means that there will be more than one microwave transmitter and more than one microwave receiver, i.e. one transmitter and one receiver in each intrusion detector. This presents a potential problem for all intrusion detectors if they are operating at the same or similar microwave frequency.

Even with microwave transmission frequencies far apart, there is a risk of unwanted disturbances since a pulsed microwave transmitter will generate a wide spectrum of "spikes". The problem lies in that the microwave transmitter in each intrusion detector will disturb the microwave receivers in each of the other intrusion detectors. The disturbance may cause unwanted signals in a receiver, which signals may be difficult to distinguish from Doppler shifts caused by an intrusion and may therefore be determined to be caused by intrusions. This means that unwanted false alarms may occur in the intrusion detectors, which is a disadvantage.

Regarding prior art, it can be noted that the patent US 6426716 teaches a motion sensor based on a microwave transceiver apparatus. The apparatus comprises a noise generator being arranged to control the PRF which controls the transmit pulse generator, and supposedly reduces interference to other spectrum users. The noise imposed on the PRF frequency has a weakness in that it does not eliminate clashing; if more than one intrusion detector is used, there is no correlation of noise generators in those multiple intrusions detectors, which means that the effect of the noise generators is uncontrolled and does not reduce clashing.

Furthermore, the patent US 7123145 teaches a motion sensor based on a microwave transceiver apparatus. The apparatus comprises an interference evaluation mechanism, but the purpose is not to detect interference from another intrusion detector. It can also be noted that there is no method of avoiding the interference when it has been detected. Furthermore, it has a mechanism to adjust alarm thresholds depending on evaluation of interference. This is a disadvantage, especially if the interference is caused by another intrusion detector. In an arrangement with multiple intrusions detectors in a vehicle, the chance of interference is generally high, as all intrusion detectors are present all time, and therefore maintaining the correct detection capabilities for real intrusions with true intended alarm thresholds is inherently difficult.

There is thus a demand for improved intrusion detection in a vehicle where more than one intrusion detector is used, such that unwanted disturbances are reduced for a relatively low cost.

### SUMMARY

The object of the present invention is to provide improved intrusion detection in a vehicle comprising more than one intrusion detector in the vehicle compartment without reduced risk of false alarm caused by another intrusion detector in the vehicle.

Said object is achieved by means of a method as mentioned initially, where furthermore the method comprises: each one of said arrangements transmitting using a certain actuation frequency, each one of the actuation frequencies being different from the others by a certain amount, each microwave receiver detecting both the reflected signals from its own microwave transmitter and the transmitted energy from the other microwave transmitters in said arrangements, such that mixing products occur as well as difference frequencies of the mixing products; and adapting the actuation frequencies such that, for each one of said arrangements, the mixing products and the difference frequencies of the mixing products appear outside the pass band of a Doppler band pass filter.

Said object is also achieved by means of a system as mentioned initially, which furthermore comprises: a Doppler band pass filter having a certain pass band, where each one of said arrangements is arranged to transmit using a certain actuation frequency, each one of the actuation frequencies being different from the others by a certain amount, where each microwave receiver is arranged to detect both the reflected signals from its own microwave transmitter and the transmitted energy from the other microwave transmitters in said arrangements, such that mixing products occur as well as difference frequencies of the mixing products, and where the actuation frequencies are arranged in such a manner that, for each one of said arrangements, the mixing products and the difference frequencies of the mixing products appear outside the pass band.

According to a certain embodiment, for each one of said arrangements, a phase shifter is arranged to change the phase of the actuation of the microwave transmitter when interference from one other of said arrangements is detected.

Other embodiments are disclosed in the dependent claims.

A number of advantages is obtained by means of the present invention. For example, more than one intrusion detector may be used in a vehicle compartment with reduced interference between the intrusion detectors.

### BRIEF DESCRIPTION OF THE DRAWINGS

The invention will now be described in more detail with reference to a preferred exemplary embodiment and to the attached drawings, in which:
- Fig. 1: is a schematical drawing of a vehicle being equipped with an arrangement in accordance with the present invention;
- Fig. 2: is a schematic block diagram showing the design of an intrusion detector;
- Fig. 3: is a diagram showing a sequence involving a number of timing pulses, said sequence illustrating the activation of a transmitter and receiver in an intrusion detector;
- Fig. 4: is a spectral diagram for PRF frequencies, one for each intrusion detector, where furthermore the relation between PRF frequencies for each transmitter is described in accordance with the present invention; and
- Fig. 5: is a timing diagram showing PRF frequency of two intrusion detectors with clash occurrence and resultant adjustment of PRF frequency or phase in one intrusion detector.

### DETAILED DESCRIPTION

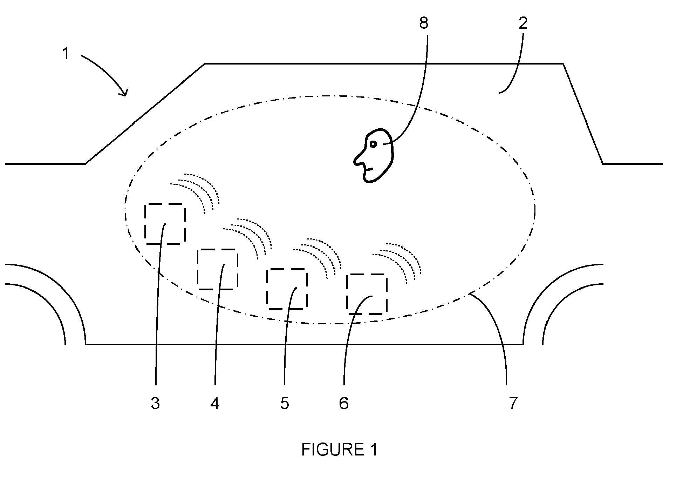

Figure 1 shows a vehicle 1 having a vehicle compartment 2. In the compartment there is a first intrusion detector 3, a second intrusion detector 4, a third intrusion detector 5 and a fourth intrusion detector 6.

Each intrusion detector comprises a microwave transmitter which is arranged for transmitting microwave radiation into the passenger compartment 2. As illustrated in a schematical manner in Figure 1, the microwave radiation is emitted into a predetermined presence detection volume 7, preferably having dimensions and being positioned so as to correspond to a predetermined part of the passenger compartment of the vehicle 1 in which the presence of a living human person (or animal) is to be detected. Such a person is illustrated in a simplified manner by means of reference numeral 8 in Figure 1.

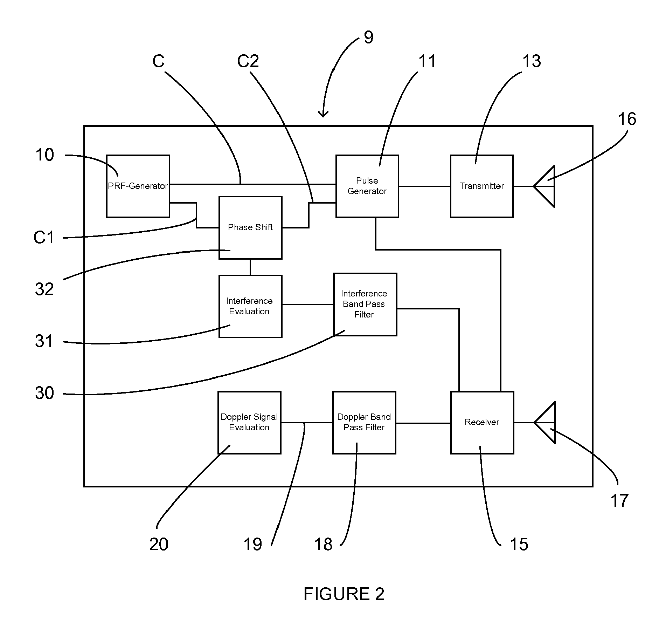

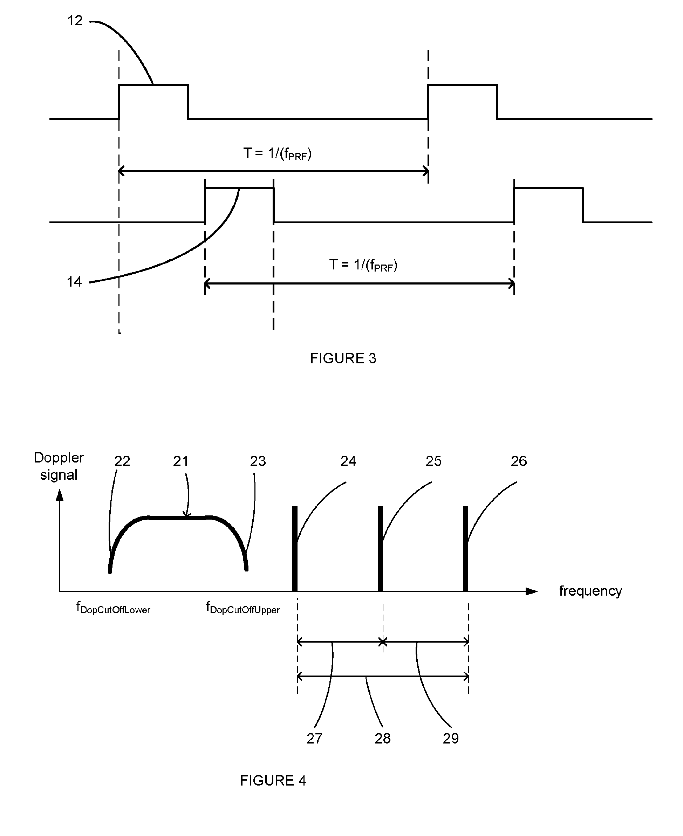

With reference to Figure 2, each intrusion detector 3, 4, 5, 6 comprises a transmit/receive arrangement 9. A PRF (Pulse Repetition Frequency) generator 10 is producing pulses that trig a pulse generator 11 via a connection C. Also with reference to Figure 3, the purpose of the pulse generator 11 is to produce first pulses 12 that control the active state of a microwave transmitter 13. The pulse generator 11 also produces second pulses 14 that control the active state of a microwave receiver 15.

The microwave transmitter 13 transmits signals via a transmitting antenna 16, and the microwave receiver 15 receives signals via a receiving antenna 17.

According to the present invention, the frequencies of the PRF pulses 12, 14 controlling the microwave transmitter 13 and the microwave receiver 15 in each intrusion detector 3, 4, 5, 6 shall have a specific relationship. This will be described more in detail below.

With reference to Figure 1 and Figure 2, each intrusion detector 3, 4, 5, 6 comprises a Doppler band pass filter 18 which has an output 19 connected to a Doppler signal evaluation unit 20 and receives input from the receiver 17. The Doppler signal evaluation unit 20 comprises a suitable evaluation algorithm.

Also with reference to Figure 4, the Doppler band pass filter 18 has a frequency response 21 with a lower cut off frequency 22 and an upper cut-off frequency 23, a pass band being apparent between the lower cut off frequency 22 and the upper cut-off frequency 23. In this example, the lower cut off frequency is 1 Hz and the upper cut off frequency is 40 Hz. For the intrusion detectors 3, 4, 5, 6, each microwave receiver 15 will detect transmitted microwave pulses from its own transmitter 13, and from corresponding microwave transmitters 13 in the other intrusion detectors.

According to the example, the first intrusion detector 3 has a first PRF frequency of 1 000 000 Hz, the second intrusion detector 4 has a second PRF frequency of 1 000 050 Hz, the third intrusion detector 5 has a third PRF frequency of 1 000 150 Hz, and the fourth intrusion detector 6 has a fourth PRF frequency of 1 000 350 Hz,

Mixing products from PRF frequencies in the other intrusion detectors are produced in each intrusion detector.

With 40 Hz upper cut off frequency, all the undesirable mixing products must be above the basic frequency range 21 of the Doppler band pass filter 18. Preferably, the frequency of the lowest mixing product shall be such that the Doppler band pass filter output 19 has been attenuated to such a degree that it will not have any significant amplitude when input into the Doppler signal evaluation unit 20.

Figure 4 shows a first mixing product 24, a second mixing product 25 and a third mixing product 26, being mixing products of PRF frequencies as detected by each intrusion detector 3, 4, 5, 6.

Below there is a first table which shows an example with the PRF frequencies and the resultant mixing products for each intrusion detector 3, 4, 5, 6. In this example, the attenuation of the Doppler band pass filter 18 at 50 Hz is sufficient to reduce the amplitude response for the mixing products 24, 25, 26 to insignificant levels.

| Intrusion detector and assigned PRF frequency | Frequency of the first mixing product 24 | Frequency of the first mixing product 25 | Frequency of the third mixing product 26 |
|---|---|---|---|
| 3: 1000000 Hz | 50 Hz | 150 Hz | 350 Hz |
| 4: 1000050 Hz | 50 Hz | 100 Hz | 200 Hz |
| 5: 1000150 Hz | 100 Hz | 150 Hz | 200 Hz |
| 6: 1000350 Hz | 200 Hz | 300 Hz | 350Hz |

Figure 4 also shows a first differential frequency 27, a second differential frequency 28 and a third differential frequency 29, being differential frequencies of the mixing products 24, 25, 26 as detected by each intrusion detector 3, 4, 5, 6. These differential frequencies 27, 28, 29 are undesired as well.

Below there is a second table which shows resultant differential frequencies of the mixing products from the first table, where all the differential frequencies 27, 28, 29 are above the upper cut off frequency 23 of the Doppler band pass filter 18. This is essential to the present invention, since the undesired mixing products 24, 25, 26 as well as the undesired resultant differential frequencies 27, 28, 29 of the mixing products thus are reduced to insignificant levels.

| Intrusion detector and assigned PRF frequency | Difference frequency 27 | Difference frequency 28 | Difference frequency 29 |
|---|---|---|---|
| 3: 1000000 Hz | 100 Hz | 300 Hz | 200 Hz |
| 4: 1000050 Hz | 50 Hz | 250 Hz | 200 Hz |
| 5: 1000150 Hz | 50 Hz | 100 Hz | 50 Hz |
| 6: 1000350 Hz | 100 Hz | 150 Hz | 50Hz |

Since all the mixing products 24, 25, 26 and the differential frequencies 27, 28, 29 all are above the upper cut-off frequency 23 of the Doppler band pass filter 18, none of these frequencies will have any significant amplitude in the output 19 of the Doppler band pass filter 18, which output 19 is fed to the Doppler signal evaluation unit 20.

The evaluation algorithm does thus not have to consider the presence of other intrusion detectors which simplifies the design. The Doppler signal evaluation unit 20 can have the same evaluation algorithm regardless of how many intrusion detectors that are present in the vehicle 1, i.e. no variants are needed and that keep low cost. By means of the present invention, the four intrusion detectors 3, 4, 5, 6 shown in the example above can operate simultaneously in the vehicle 1 without any risk of false alarms caused by mutual clashing among the intrusion detectors 3, 4, 5, 6 and their detection capabilities are not degraded.

Additionally, in another preferred embodiment example with reference to Figure 1 and Figure 2, the PRF generator 10 is producing pulses that are passed through a phase shifter 32. The phase shifter 32 has the capability to adjust the phase of the incoming PRF signal and forward it to the pulse generator 11. The PRF generator is connected to the phase shifter 32 via a first connection C1, and the phase shifter 32 is connected to the pulse generator 11 via a second connection C2. In this embodiment example, the connection C between the PRF generator 10 and the pulse generator 11 is not used. The purpose of the pulse generator 11 is the same as described above.

According to this embodiment example, in order to further reduce the problem with undesired interference signals from adjacent intrusion detectors 3, 4, 5, 6, each transmit/receive arrangement 9 further comprises an interference band pass filter 30 and an interference evaluation unit 31. The microwave receiver 15, the interference band pass filter 30 and the interference evaluation unit 31 are arranged to determine whether the received microwave energy is produced by the microwave transmitter 13 in its own intrusion detector, or by a microwave transmitter 13 in another intrusion detector. How this is accomplished is disclosed below.

Interference from adjacent intrusion detectors cause large undesired signals in the receiver 15. This is partly because the microwave energy is radiated directly from a transmitting antenna 16 to a receiving antenna 17 in one direct path; it does not have to travel from a transmitting antenna 16, via a reflection at a target object, and back to a receiving antenna 17, via two paths.

As discussed previously, the microwave receiver 15 is connected to the Doppler band pass filter 18, which has an upper cut off frequency of typically 40 Hz. This means that interference that is received by the microwave receiver 15 will take some time to propagate thru the Doppler band pass filter 18, typically in the order of milliseconds.

The microwave receiver 15 is also connected to the interference band pass filter 30, which has a lower cut off frequency of typically 500 Hz and an upper cut off frequency of typically 50 kHz. This means that interference that is received by the microwave receiver 15 will take some time to propagate thru the interference band pass filter 30, typically in the order of microseconds.

Real intrusions signals will not produce Doppler frequencies high enough to pass the interference band pass filter 30.

The difference in upper cut off frequency of the Doppler band pass filter 18 and the interference band pass filter 30 enables the interference evaluation unit 31 to receive the interference signal before it has passed the Doppler band pass filter 18 and is available to the Doppler signal evaluation unit 20.

By means of example, the interference evaluation unit 31 uses algorithms based on frequency, duration or other aspects for the real-time determining whether interference is present or not. The interference evaluation unit 31 evaluates the characteristics of the interference detected by the microwave receiver 15, and produces an output signal when the interference has increased to a level that would, if no measures where taken to counteract it, significantly affect the evaluation of possible intrusion. Since the interference signal is available as input to the interference evaluation unit 31, before it has resulted in significant amplitude in the Doppler band pass filter output 19, the interference evaluation unit 31 may be arranged to determine an appropriate output to the phase shifter 32 to prevent further increase of interference in the Doppler band pass filter output 19. The interference evaluation unit 31 is thus reached by the output from the receiver 15 before the Doppler signal evaluation unit 20. The algorithms in the interference evaluation unit 31 are suitably based on predetermined knowledge about the way intrusion detectors may interfere with each other.

The interference evaluation unit 31 produces an output signal that it is fed to the phase shifter 32. The purpose of the phase shifter 32 is to increase the time separation between pulses generated by the pulse generators 11 in different intrusion detectors 3, 4, 5, 6, those pulses being fed to the respective microwave transmitter 13 and microwave receiver 15. The time separation between first and second pulses 12, 14 which are generated in each intrusion detector is not affected by phase shifter 32. The phase may be shifted gradually, in discrete steps, or in any suitable manner that is best suited to reduce interference.

In this way, mutual interference of intrusion detectors is reduced by reducing simultaneous or partially overlapping microwave transmissions from the transmitters 13 in each intrusion detector 3, 4, 5, 6.

In Figure 3, as discussed previously, first pulses 12 represent the duration interval in which the transmitter 13 in each intrusion detector is in its active state and transmits microwave energy, and second pulses 14 represent the duration interval in which the microwave receiver 15 is in its active state in each intrusion detector, and thus is susceptible for interference.

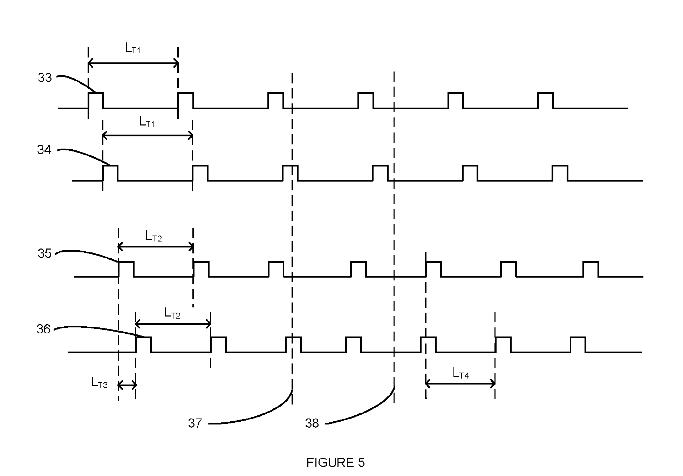

A clarifying example of this embodiment is shown in Figure 5, where the first intrusion detector 3 and the second intrusion detector 4 are experiencing interference. In the first intrusion detector 3, a first pulse train 33, having a first pulse length L_{T1}, represents the PRF generator 10 output and a second pulse train 34 represents the PRF frequency and phase from the phase shifter 32. In the second intrusion detector 4, a third pulse train 35, having a second pulse length L_{T2}, represents the PRF generator 10 output and a fourth pulse train 36 represents the PRF frequency and phase from the phase shifter 32. The second and fourth pulse trains 34 and 36 correspond to the second pulses 12 in Figure 3, which control when the microwave transmitter 13 is in its active state.

Due to natural frequency drift of the PRF generator 10 in the first intrusion detector 3 and the second intrusion detector 4, the first pulse train 33 and the third pulse train 35 may overlap in time, partially or fully. In practice, this means that the values of the first pulse length L_{T1} and the second pulse length L_{T2} change over time. This frequency drift may for example be due to different temperatures in the first intrusion detector 3 and the second intrusion detector 4, component tolerance, ageing, and other factors. This is undesirable since it causes interference, but is inevitable if the costs should be kept low.

The second pulse train 34 is thus a compensated first pulse train 33, where the compensation is in the form of a phase shift in order to avoid overlap and interference between the first intrusion detector 3 and the second intrusion detector 4. In the same way, the fourth pulse train 36 is a compensated third pulse train 35. It is thus the second pulse train 34 and the fourth pulse train 36 which control the respective transmitters 13 in practice.

In Figure 5, initially, the second pulse train 34 also has the first pulse length L_{T1}. Furthermore, the phase shifter 32 of the second intrusion detector 4 produces a phase shift, corresponding to a first time delay L_{T3}. As explained above, when such overlap is detected, at a first certain point in time 37, it is considered to constitute interference by the interference evaluation unit 31.

Then, an adjustment of the PRF phase is made in the phase shifter 32 of the intrusion detector that first makes such judgement, in this example the second intrusion detector 4. After a second certain point in time 38, as determined by the interference evaluation unit 31, the new phase shift is set and corresponds to a second time delay L_{T4}. This surveillance and, whenever needed, adjusted phase shifts, continues, such that future interference is reduced.

In practice, according to the embodiment example with reference to Figure 5, the frequency of the PRF generator 10 in each intrusion detector 3, 4, 5, 6 can be identical or similar, which simplifies design and reduces cost.

The present invention is not limited to the embodiment examples above. For example, any number of intrusion detectors may be used, but at least two should be used in order for the problem that is solved by means of the present invention to occur; interference between adjacent intrusion detectors.

The frequencies presented for the band pass filter 18 and the intrusion detectors 3, 4, 5, 6 are only examples. The present invention lies in the use of such frequency planning for a Doppler intrusion detector system for vehicles, using two or more intrusion detectors 3, 4, 5, 6, that the mixing products of the intrusion detectors' frequencies and the difference frequencies of the mixing products may be filtered out by means of a Doppler band pass filter.

The present invention thus lies in the awareness that, in the field of Doppler intrusion detector systems for vehicles, where interference occurs between two or more intrusion detectors, a combination of certain relationship between the frequencies of the intrusion detectors and a Doppler band pass filter having a certain pass band, reduces the interference.

Furthermore, the interference may be even more reduced when adjustment of the PRF phase is performed in one or more of the intrusion detectors such that clashing is reduced. This even enables the use of intrusion detectors where the frequency of each PRF generator 10 can be identical or similar.

For example, the invention can be used in different types of vehicles, for example load-carrying trucks, buses, boats and other types of vehicles and vessels.

The exact configuration of each transmit/receive arrangement 9 may vary within the frame of the claims.

## Claims

1. A method for presence control in a vehicle (1), using at least a first arrangement (3) for transmitting and receiving microwave radiation and a second arrangement (4) for transmitting and receiving microwave radiation, said method comprising the following steps for each one of said arrangements (3, 4):
actuating a microwave transmitter (13) with a certain actuation frequency;
detecting microwave radiation by means of a microwave receiver (15); and
determining whether a living human (8) or animal is present in said vehicle (1) based on the properties of the microwave radiation being received by said microwave receiver (15);
**characterized in that** said method furthermore comprises:
each one of said arrangements transmitting using a certain actuation frequency, each one of the actuation frequencies being different from the others by a certain amount,
each microwave receiver (15) detecting both the reflected signals from its own microwave transmitter (13) and the transmitted energy from the other microwave transmitters (13) in said arrangements (3, 4), such that mixing products occur as well as difference frequencies of the mixing products; and
adapting the actuation frequencies such that, for each one of said arrangements, the mixing products and the difference frequencies of the mixing products appear outside the pass band of a Doppler band pass filter.

2. A method according to claim 1, **characterized in that** each Doppler band pass filter (18) has a frequency response (21) with a lower cut off frequency (22) and an upper cut-off frequency (23), and receives input signals from the corresponding microwave receiver (15).

3. A method according to any one of the claims 1 or 2,
**characterized in that** a Doppler signal evaluation unit (20) using a certain algorithm is connected to receive the output from each Doppler band pass filter (18).

4. A method according to any one of the previous claims, **characterized in that**, for each one of said arrangements (3, 4), a phase shifter (32) is used to change the phase of the actuation of the microwave transmitter (13) when interference from one other of said arrangements (3, 4) is detected.

5. A system for presence control in a vehicle (1), the system comprising at least a first arrangement (3) for transmitting and receiving microwave radiation and a second arrangement (4) for transmitting and receiving microwave radiation, each one of said arrangements (3, 4) comprising:
a pulse generator (10) for periodically actuating a microwave transmitter (6) with a certain actuation frequency;
a microwave receiver (15) for detecting microwave radiation within said vehicle (1), the arrangement (3, 4) being arranged for determining whether a living human (8) or animal is present in said vehicle (1) based on the microwave radiation being received by the microwave receiver (15);
**characterized in that** it also comprises:
a Doppler band pass filter (18) having a certain pass band,
where each one of said arrangements (3, 4) is arranged to transmit using a certain actuation frequency, each one of the actuation frequencies being different from the others by a certain amount, where each microwave receiver (15) is arranged to detect both the reflected signals from its own microwave transmitter (13) and the transmitted energy from the other microwave transmitters (13) in said arrangements (3, 4), such that mixing products occur as well as difference frequencies of the mixing products, and
where the actuation frequencies are arranged in such a manner that, for each one of said arrangements (3, 4), the mixing products and the difference frequencies of the mixing products appear outside the pass band.

6. A system according to claim 5, **characterized in that** each Doppler band pass filter (18) has a frequency response (21) with a lower cut off frequency (22) and an upper cut-off frequency (23), and receives input signals from the corresponding microwave receiver (15).

7. A system according to any one of the claims 5 or 6,
**characterized in that** a Doppler signal evaluation unit (20), comprising a certain algorithm, is connected to receive the output from each Doppler band pass filter (18).

8. A system according to any one of the claims 5-7,
**characterized in that**, for each one of said arrangements (3, 4), a phase shifter (32) is arranged to change the phase of the actuation of the microwave transmitter (13) when interference from one other of said arrangements (3, 4) is detected.

9. A system according to claim 8, **characterized in that** each microwave receiver (15) is connected to an interference band pass filter (30) and an interference evaluation unit (31), where the interference evaluation unit (31) is arranged to evaluate the characteristics of the interference detected by the microwave receiver (15), and to produces an output signal to the phase shifter (32) when the interference has increased to a certain level.
